# EUROPEAN PATENT SPECIFICATION

(11) **EP 2 874 367 B1**
(45) Date of publication and mention of the grant of the patent: **29.08.2018**
(21) Application number: 13803875.7
(22) Date of filing: 31.07.2013
(51) Int. Cl.: H04L 29/06, H04W 12/06, H04W 76/00

(54) **CALL AUTHENTICATION METHOD, DEVICE, AND SYSTEM**
RUFAUTHENTIFIZIERUNGSVERFAHREN, -VORRICHTUNG UND SYSTEM
PROCÉDÉ D'AUTHENTIFICATION D'APPEL, DISPOSITIF ET SYSTÈME

(30) Priority: 12.09.2012 CN 201210335631
(43) Date of publication of application: 20.05.2015
(73) Proprietor: ZTE Corporation, Shenzhen, Guangdong 518057 (CN)
(72) Inventor: XIE, Shiyun, Shenzhen Guangdong 518057 (CN); CAO, Lanjian, Shenzhen Guangdong 518057 (CN)
(74) Representative: AWA Sweden AB
(86) International application number: PCT/CN2013/080490
(87) International publication number: WO 2013/185709

(56) References cited:
- WO-A1-2011/009496
- CN-A- 102 025 685
- CN-A- 102 055 744
- CN-A- 102 396 203
- US-A1- 2007 211 867
- US-A1- 2010 266 107
- US-A1- 2011 072 488
- US-A1- 2011 194 553

## Description

### Technical Field

The present invention relates to the field of wireless communication, and particularly, to a call authentication method, device and system.

### Background of the Related Art

An emergency call is a peculiar voice service in the mobile communication system, in which a mobile subscriber is allowed to call emergency call centers such as 120 center and 119 fire alarm and so on provided by operators through a mobile communication network covering its location in a case that a mobile terminal is in limited calling or a Subscriber Identity Module (SIM) card is not inserted, wherein, the case that the mobile terminal is in limited calling or the SIM card is not inserted is called an emergency attachment case.

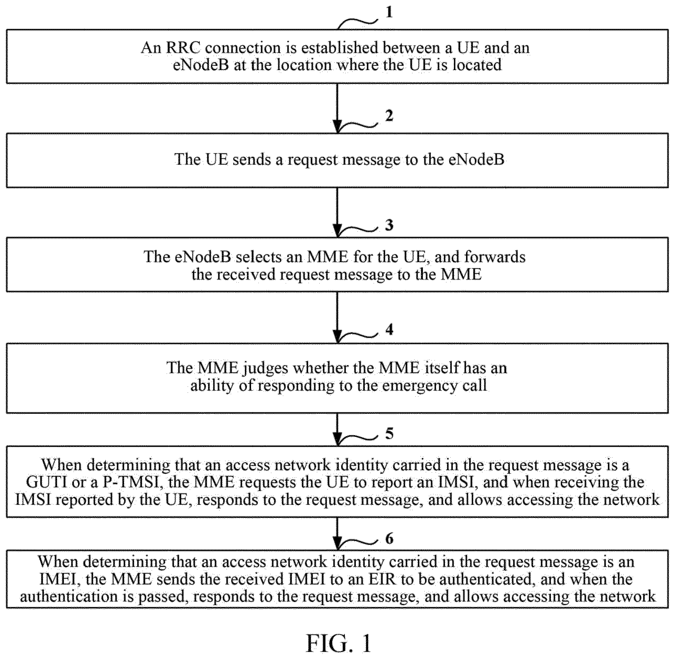

In the related art, the mobile terminal initiates an emergency call to the network side in the case of emergency attachment, and the network side can generally neglect an International Mobile Subscriber Identity (IMSI) of the mobile terminal and allows the mobile terminal to access a core network. At this point, the mobile terminal is required to send its International Mobile Equipment Identity (IMEI) of the mobile terminal to the network side; and when receiving the IMEI of the mobile terminal, the network side takes the IMEI as identity information for the mobile terminal emergently accessing the core network. As shown in FIG. 1, FIG. 1 is a flow chart of a subscriber initiating an emergency call through the mobile communication network by using the mobile terminal, and the following steps are included.

In step 1, a Radio Resource Control (RRC) connection is established between a mobile terminal (i.e., a User Equipment (UE)) and a base station at the location where the UE is located (i.e., an Evolved Node B (eNodeB)).

In step 2, the UE sends a request message to the eNodeB, the request message contains a call type and an access network identity, wherein, the call type is an emergency call type.

The access network identity can be a Globally Unique Temporary Identity (GUTI) or a Packet Temporary Mobile Subscriber Identity (P-TMSI) saved by the UE, or an IMSI of the UE, or an IMEI of the UE.

In step 3, the eNodeB selects a Mobile Management Entity (MME) for the UE, and forwards the received request message to the MME.

In step 4, the MME judges whether the MME itself has an ability of responding to the emergency call, when determining that it has the ability of responding to the emergency call, judges the access network identity of the UE carried in the received request message, executes step 5; and when determining that it does not have the ability of responding to the emergency call, returns a rejection response message.

In step 5, when determining that the access network identity carried in the request message is the GUTI or P-TMSI, the MME requests the UE to report the IMSI, and when receiving the IMSI reported by the UE, responds to the request message, and allows accessing the network.

In step 6, when determining that the access network identity carried in the request message is the IMEI, the MME sends the received IMEI to an Equipment Identity Register (EIR) to be authenticated, and when the authentication is passed, responds to the request message, and allows accessing the network.

In the communication system, when the MME responds to the emergency call request of the terminal, after determining that the access network identity reported by the UE is the IMEI, the MME only determines whether the IMEI is blacklisted, and when determining that the IMEI is not blacklisted, allows the UE to access the core network.

Therefore, it will not only cause that a lawbreaker accesses the core network in such a way of emergency call and attacks the core network maliciously to increase insecurity factors of the communication network, but also cause that air interface resources occupied in the communication are not in safety protection since no secure communication link is established between the UE and the network side in the emergency call, which makes certain information in the emergency call be stolen or tampered, and makes the security of the emergency call worse.

An example of prior art method is described in US2010/266107A1 (BRUSILOVSKY ALEC [US] ET AL) 21 October 2010, in which techniques are provided for handling of an emergency call as it affects an authentication procedure in a communication network. For example, it is assumed that, in a communication network, a first computing device comprises user equipment and a second computing device comprises an authentication function. Thus, a method comprises the following steps. A first type call indicator message is received at the second computing device from the first computing device. A decision is made to proceed with or drop an authentication procedure for the first computing device at the second computing device based on the first type call indicator message. The second computing device may enable a first type call to be placed for the first computing device. The first type call may be an emergency call.

### Summary of the Invention

The invention is defined by the independent claims. The embodiments of the present invention provide a call authentication method, device and system, which solve a problem that, when a user terminal sends an emergency call request to a network side in a case of emergency attachment, since the network side does not perform security authentication on the user terminal that initiates the call, worse security of the emergency call is caused in the related art as defined in the attached independent claims.

The embodiment of the present invention also provides a call authentication method, which comprises:
a Mobile Management Entity (MME) receiving an emergency call request message carrying an access network identity sent by a user terminal, and carrying the access network identity into a query request to send to a Home Subscriber Server (HSS);
the MME receiving a query result carrying verification information and first authentication data returned by the HSS, wherein, the first authentication data are obtained by the HSS performing calculation with a searched security key and randomly generated verification information; the security key comprises a device key; the device key is determined by the HSS according to a locally stored corresponding relation between an access network identity and a device key;
the MME receiving second authentication data sent by the user terminal, wherein, the second authentication data are obtained by the user terminal performing calculation with a locally stored security key and verification information after receiving the verification information sent by the MME; and
the MME comparing the first authentication data and the second authentication data, and when a comparison result is that the first authentication data and the second authentication data are identical, determining that an authentication is passed, and allowing the user terminal to access a communication network.

Alternatively, the method further comprises: after allowing the user terminal to access the communication network,
the MME receiving an emergency call message carrying emergency call contents sent by the user terminal, wherein, the emergency call contents are obtained after being encrypted by the user terminal with the security key; and
the MME sending the received emergency call message to the HSS to be parsed, and returning a response message to the user terminal according to a parse result.

Alternatively, the method further comprises: after the MME receives the emergency call request message and before the MME sends the query request to the HSS,
according to a corresponding relation between the access network identity of the user terminal and a number of emergency call requests, the MME searching for a number of times for the user terminal sending the emergency call request to the MME within a set duration; and
the MME judging whether a searched number of emergency call requests is greater than a set threshold value, if yes, rejecting to respond to the emergency call request of the user terminal; and if not, executing an operation of sending the query request to the HSS.

Alternatively, the step of the MME receiving the second authentication data sent by the user terminal comprises:
the MME receiving the second authentication data obtained by the user terminal performing calculation on the received verification information with the locally stored security key when the user terminal receives the verification information sent by the MME.

Alternatively, the step of the MME comparing the first authentication data and the second authentication data comprises:
the MME judging whether the received first authentication data and the second authentication data are identical, if the first authentication data and the second authentication data are identical, executing an operation of determining that the authentication is passed and allowing accessing the network; and if the first authentication data and the second authentication data are different, executing an operation of determining that the authentication is not passed and rejecting accessing the network.

The embodiment of the present invention further provides a call authentication method, which comprises:
a Home Subscriber Server (HSS) receiving a query request sent by a Mobile Management Entity (MME), wherein, the query request contains an access network identity, and the access network identity is carried in an emergency call request message sent by a user terminal to the MME;
according to a locally stored corresponding relation between an access network identity and a device key, the HSS determining a device key corresponding to the access network identity contained in the query request, and performing calculation with a security key containing the device key and randomly generated verification information to obtain first authentication data; and
the HSS taking the randomly generated verification information and the obtained first authentication data as a query result to send to the MME, so that the MME compares the obtained first authentication data and received second authentication data sent by the user terminal, and when a comparison result is that the first authentication data and the second authentication data are identical, determining that an authentication is passed, and allowing the user terminal to access a communication network.

Alternatively, the access network identity is an International Mobile Equipment Identity (IMEI) of the user terminal;
the locally stored corresponding relation between the access network identity and the device key comprises:
a corresponding relation between the IMEI of the user terminal and the device key locally stored by the HSS

The embodiment of the present invention further provides a call authentication device, which comprises:
a first receiving module, configured to: receive an emergency call request message carrying an access network identity sent by a user terminal, and carry the access network identity into a query request to send to a Home Subscriber Server (HSS);
a second receiving module, configured to: receive a query result carrying verification information and first authentication data returned by the HSS, wherein, the first authentication data are obtained by the HSS performing calculation with a searched security key and randomly generated verification information; the security key comprises a device key; the device key is determined by the HSS according to a locally stored corresponding relation between an access network identity and a device key;
a third receiving module, configured to: receive second authentication data sent by the user terminal, wherein, the second authentication data are obtained by the user terminal performing calculation on verification information with a locally stored security key after receiving the verification information sent by a Mobile Management Entity (MME); and
a comparison module, configured to: compare the first authentication data and the second authentication data, and when a comparison result is that the first authentication data and the second authentication data are identical, determine that an authentication is passed, and allow the user terminal to access a communication network.

Alternatively, the device further comprises:
a fourth receiving module, configured to: after allowing the user terminal to access the communication network, receive an emergency call message carrying emergency call contents sent by the user terminal, wherein, the emergency call contents are obtained after being encrypted by the user terminal with the security key; and
a message processing module, configured to: send the received emergency call message to the HSS to be parsed, and return a response message to the user terminal according to a parse result.

Alternatively, the emergency call request message carries the access network identity of the user terminal;
the device further comprises: a call-times determination module and a call judgment module, wherein:
the call-times determination module is configured to: before carrying the received access network identity into the query request to send to the HSS, according to a corresponding relation between the access network identity of the user terminal and a number of emergency call requests, search for a number of times for the user terminal sending an emergency call request within a set duration; and
the call judgment module is configured to: judge whether a searched number of emergency call requests is greater than a set threshold value, if yes, reject to respond to the emergency call request of the user terminal; and if not, execute an operation of carrying the received access network identity into the query request to send to the HSS.

Alternatively, the comparison module is configured to compare the first authentication data and the second authentication data in the following way:
judging whether the received first authentication data and the second authentication data are identical, if the first authentication data and the second authentication data are identical, executing an operation of determining that the authentication is passed and allowing accessing the network; and if the first authentication data and the second authentication data are different, executing an operation of determining that the authentication is not passed and rejecting accessing the network.

The embodiment of the present invention further provides a Home Subscriber Server (HSS), which comprises:
a receiving module, configured to: receive a query request sent by a Mobile Management Entity (MME), wherein, the query request contains an access network identity, and the access network identity is carried in an emergency call request message sent by a user terminal to the MME;
a first authentication data calculation module, configured to: according to a locally stored corresponding relation between an access network identity and a device key, determine a device key corresponding to the access network identity contained in the query request, and perform calculation with a security key containing the device key and randomly generated verification information to obtain first authentication data; and
a sending module, configured to: take the randomly generated verification information and the obtained first authentication data as a query result to send to the MME, so that the MME compares the obtained first authentication data and received second authentication data sent by the user terminal, and when a comparison result is that the first authentication data and the second authentication data are identical, determine that an authentication is passed, and allow the user terminal to access a communication network.

Alternatively, the access network identity is an International Mobile Equipment Identity (IMEI) of the user terminal;
the first authentication data calculation module is further configured to: store a corresponding relation between the IMEI of the user terminal and the device key.

The embodiment of the present invention further provides a call authentication system, which comprises: a Mobile Management Entity (MME), a user terminal and a Home Subscriber Server (HSS); wherein,
the MME is configured to: receive an emergency call request message sent by the user terminal, and send a query request containing an access network identity carried in the emergency call request message to the HSS; receive a query result carrying verification information and first authentication data returned by the HSS, and second authentication data sent by the user terminal; compare the first authentication data and the second authentication data, and when a comparison result is that the first authentication data and the second authentication data are identical, determine that an authentication is passed, and allow the user terminal to access a communication network; after allowing the user terminal to access the communication network, receive an emergency call message carrying emergency call contents sent by the user terminal, wherein, the emergency call contents are obtained after being encrypted by the user terminal with a security key; and send the received emergency call message to the HSS to be parsed, and return a response message to the user terminal according to a parse result;
the user terminal is configured to: send the emergency call request message carrying the access network identity to the MME; send the second authentication data to the MME; and after being allowed to access the communication network, send the emergency call message carrying the emergency call contents to the MME, wherein, the emergency call contents are obtained after being encrypted with the security key; and
the HSS is configured to: receive the query request carrying the access network identity sent by the MME, and according to a locally stored corresponding relation between an access network identity and a device key, determine a device key corresponding to the access network identity contained in the query request, and perform calculation with a security key containing the device key and randomly generated verification information to obtain the first authentication data and send the first authentication data to the MME; and after allowing the user terminal to access the communication network, receive and parse the emergency call message carrying the emergency call contents sent by the MME.

Alternatively, the user terminal is further configured to: when the user terminal receives the verification information sent by the MME, perform calculation on the received verification information with the locally stored security key to obtain the second authentication data.

In the embodiments of the present invention, the corresponding relation between the IMEI of the user terminal and the device key is locally stored in the user terminal and the HSS respectively, which prevents an illegal user terminal from maliciously using the communication network by means of emergency call, thereby improving the security of the emergency call and guaranteeing the security of application of the communication network.

### Brief Description of Drawings

FIG. 1 is a flow chart of a user initiating an emergency call through the mobile communication network by using the mobile terminal.
FIG. 2 is a flow chart of a call authentication method according to the embodiment 1 of the present invention.
FIG. 3 is a schematic diagram of a structure of a call authentication device according to the embodiment 2 of the present invention.
FIG. 4 is a schematic diagram of a structure of an HSS according to the embodiment 3 of the present invention.
FIG. 5 is a structure diagram of a call authentication system according to the embodiment 4 of the present invention.

### Preferred Embodiments of the Invention

The embodiments of the present invention disclose a call authentication method, device and system, by locally storing the corresponding relation between the IMEI of the user terminal and the device key in the user terminal and the HSS respectively, when the user terminal sends the emergency call request message to the MME, the MME acquires the security key containing the device key, and the first authentication data obtained by performing calculation with the security key and the random verification information from the HSS, and receives the second authentication data obtained through calculation according to the locally stored security key and the received verification information sent by the user terminal, and compares the first authentication data and the second authentication data, when the comparison result is that the first authentication data and the second authentication data are identical, determines that the authentication is passed, and allows the user terminal to access the communication network, which prevents an illegal user terminal from maliciously using the communication network by means of emergency call, thereby improving the security of the emergency call and guaranteeing the security of application of the communication network.

It should be noted that in the scheme of the embodiment of the present invention, a symmetrical device key is set in the network side and the user terminal, which is used for the network side performing authentication on the user terminal. The device key is associated with the IMEI of the user terminal, the network side stores a corresponding relation between the IMEI of the user terminal and the device key, and the device key in the HSS, the network side can only acquire a calculation result obtained by performing calculation with the device key through a query and cannot directly acquire the device key; a legal user terminal stores its own device key in a security component, and it also can only acquire a calculation result obtained by performing calculation with the device key through a query and cannot directly acquire the device key, wherein, it is a one-to-one correspondence relation between the device key and the IMEI, and each device key corresponds to only one IMEI.

The security key involved in all the embodiments of the present invention, no matter in the network side or the user terminal, is obtained by performing calculation with the stored device key, parameter information and access network identity information of the user terminal according to a set calculation method, both the network side and the user terminal have a function of encryption and decryption, which guarantees the security in a signaling transmission process and makes the utilized air interface resources be protected.

All the embodiments of the present invention will be described in detail in combination with the description of accompanying drawings. It should be noted that the embodiments in the present invention and the characteristics in the embodiments can be optionally combined with each other in the condition of no conflict.

### Embodiment 1

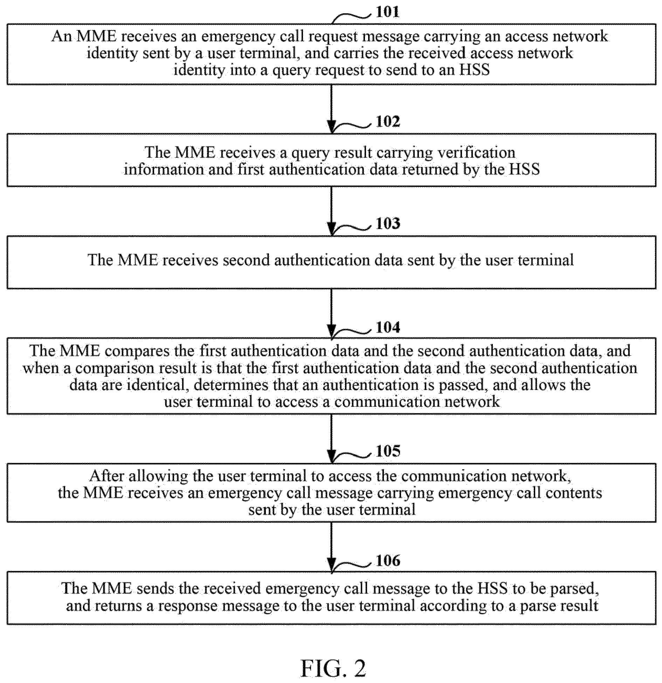

As shown in FIG. 2, it is a flow chart of a call authentication method according to the embodiment 1 of the present invention, and the method includes the following steps.

In step 101, an MME receives an emergency call request message carrying an access network identity sent by a user terminal, and carries the access network identity into a query request to send to an HSS.

Wherein, the access network identity is an IMEI of the user terminal.

In the step 101, when the user terminal is in limited calling or an SIM card/a Universal Subscriber Identity Module (USIM) card is not inserted, and an emergency call request is required to be initiated, the user terminal takes its own IMEI as the access network identity and carries the access network identity into the emergency call request message to send to the MME.

Alternatively, when receiving the emergency call request message sent by the user, the MME indicates the user terminal to report the access network identity, so as to identify the user terminal.

When the access network identity reported by the user terminal and received by the MME is a GUIT or a P_TMSI, the user terminal is indicated to report an IMSI of the user terminal; and when the access network identity reported by the user terminal and received by the MME is the IMSI, the user terminal is indicated to report the IMEI of the user terminal.

It should be noted that, when the user terminal is in a state that the SIM card is not inserted, there is no IMSI, only the IMEI can be provided to the MME.

Alternatively, after the MME receives the emergency call request message, and before the MME sends the query request to the HSS, the method also includes:
firstly, according to a corresponding relation between the access network identity of the user terminal and the number of emergency call requests, the MME searching for the number of times for the user terminal sending the emergency call request to the MME within a set duration;
wherein, the MME itself has a counter used for counting the number of emergency calls initiated by the user terminal, every time the user terminal sends the emergency call request message, the MME will add one to the number of emergency calls of the user terminal, and record time and a corresponding relation between the access network identity of the user terminal and the number of emergency calls;
secondly, the MME judging whether a searched number of call requests is greater than a set threshold value, if yes, rejecting to respond to the emergency call request of the user terminal; and if not, executing an operation of sending the query request to the HSS;
wherein, the set threshold value is to limit the number of times for one user terminal sending the emergency call request to the MME within a unit time, and it is generally determined according to the actual demand, which is not limited here.

In step 102, the MME receives a query result carrying verification information and first authentication data returned by the HSS.

Wherein, the first authentication data are obtained by the HSS performing calculation with a searched security key and randomly generated verification information, wherein, the security key contains a device key, the device key is determined by the HSS according to a locally stored corresponding relation between the access network identity and the device key.

In the step 102, the MME contains the access network identity carried in the received emergency call request message into the query request to send to the HSS.

After the HSS receives the query request sent by the MME, the following operation steps are executed.

In step 1, according to the locally stored corresponding relation between the access network identity and the device key, a device key corresponding to the access network identity contained in the query request is determined.

In step 2, a security key containing the device key and the randomly generated verification information are used for calculating to obtain the first authentication data.

It should be noted that, the way of calculation can be to use a set algorithm, and it also can be to calculate according to a protocol rule in the 3rd Generation Partnership Project (3GPP) protocol, which is not limited here.

In step 3, the randomly generated verification information and the obtained first authentication data are taken as a query result to be sent to the MME.

Wherein, the verification information can be verification information in a 3GPP format, such as RAND; the first authentication data are device-challenge; the query result is RAND∥device-challenge, it also can be information in other forms, which is determined according to the actual requirement and not limited here.

In step 103, the MME receives second authentication data sent by the user terminal.

Wherein, the second authentication data are obtained by the user terminal performing calculation with the locally stored security key and the verification information after receiving the verification information sent by the MME.

In the step 103, the MME receives the query result returned by the HSS, the query result contains random verification information, and the MME sends the random verification information to the user terminal.

After the user terminal receives the verification information, the following operation steps are executed.

In step 1, a device key corresponding to the IMEI of the user terminal itself is determined.

In step 2, it is to perform calculation on the received verification information with the security key containing the determined device key to obtain the second authentication data.

In step 3, the obtained second authentication data are sent to the MME.

In step 104, the MME compares the first authentication data and the second authentication data, and when a comparison result is that the first authentication data and the second authentication data are identical, determines that an authentication is passed, and allows the user terminal to access a communication network.

In the step 104, the MME judges whether the received first authentication data and the second authentication data are identical, if the first authentication data and the second authentication data are identical, executes an operation of determining that the authentication is passed and allowing accessing the network; and if the first authentication data and the second authentication data are different, executes an operation of determining that the authentication is not passed and rejecting accessing the network.

In step 105, after allowing the user terminal to access the communication network, the MME receives an emergency call message carrying emergency call contents sent by the user terminal, wherein, the emergency call contents are obtained after being encrypted by the user terminal with the security key.

In order to guarantee that the emergency call message sent by the user terminal is not tampered, when the user terminal sends the emergency call message to the MME, an encryption operation is performed on the carried emergency call contents, which guarantees the security of the transmitted message.

In step 106, the MME sends the received emergency call message to the HSS to be parsed, and returns a response message to the user terminal according to a parse result.

Since the HSS stores the device key, and the security key is determined by the device key, the MME is required to perform decryption operation on the received encrypted emergency call message through the HSS when receiving the encrypted emergency call message.

In the scheme of the embodiment 1 of the present invention, by locally storing the corresponding relation between the IMEI of the user terminal and the device key in the user terminal and the HSS respectively, when the user terminal sends the emergency call request message to the MME, the MME acquires the security key containing the device key from the HSS, and acquires the first authentication data obtained by performing calculation with the security key and the random verification information, and receives the second authentication data obtained through calculation according to the locally stored security key and the received verification information sent by the user terminal, and compares the first authentication data and the second authentication data, when the comparison result is that the first authentication data and the second authentication data are identical, determines that the authentication is passed, and allows the user terminal to access the communication network, which prevents an illegal user terminal from maliciously using the communication network by means of emergency call, thereby improving the security of the emergency call and guaranteeing the security of application of the communication network.

### Embodiment 2

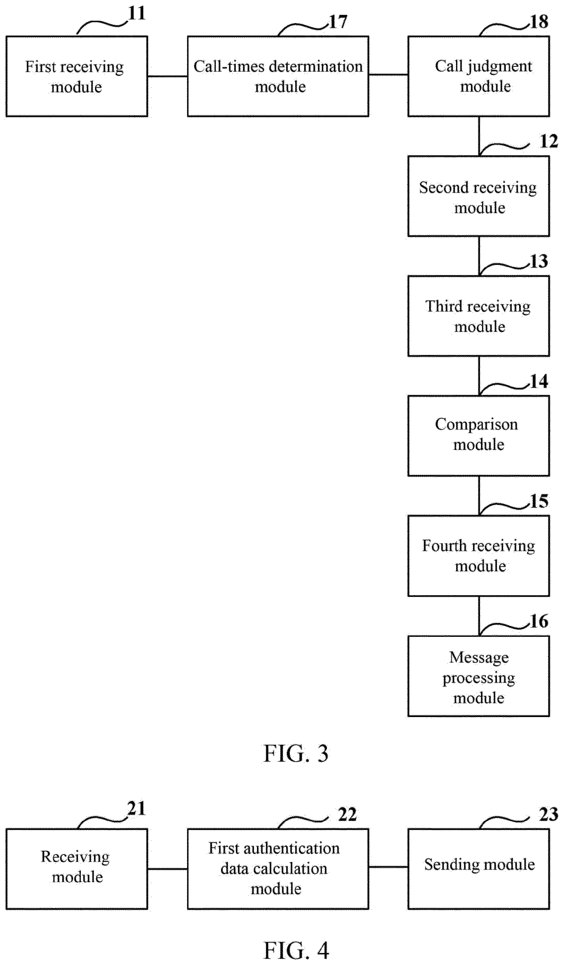

As shown in FIG. 3, it is a schematic diagram of a structure of a call authentication device according to the embodiment 2, the device includes: a first receiving module 11, a second receiving module 12, a third receiving module 13 and a comparison module 14, wherein:
the first receiving module 11 is configured to: receive an emergency call request message carrying an access network identity sent by a user terminal, and carry the access network identity into a query request to send to an HSS;
the second receiving module 12 is configured to: receive a query result carrying verification information and first authentication data returned by the HSS, wherein, the first authentication data are obtained by the HSS performing calculation with a searched security key and randomly generated verification information, the security key contains a device key, the device key is determined by the HSS according to a locally stored corresponding relation between an access network identity and a device key;
the third receiving module 13 is configured to: receive second authentication data sent by the user terminal, wherein, the second authentication data are obtained by the user terminal performing calculation on verification information with a locally stored security key after receiving the verification information sent by an MME; and
the comparison module 14 is configured to: compare the first authentication data and the second authentication data, and when a comparison result is that the first authentication data and the second authentication data are identical, determine that an authentication is passed, and allow the user terminal to access a communication network.

Alternatively, the device also includes: a fourth receiving module 15 and a message processing module 16, wherein:
the fourth receiving module 15 is configured to: after allowing the user terminal to access the communication network, receive an emergency call message carrying emergency call contents sent by the user terminal, wherein, the emergency call contents are obtained after being encrypted by the user terminal with the security key; and
the message processing module 16 is configured to: send the received emergency call message to the HSS to be parsed, and return a response message to the user terminal according to a parse result.

Wherein, the emergency call request message carries the access network identity of the user terminal.

The device also includes: a call-times determination module 17 and a call judgment module 18, wherein:
the call-times determination module 17 is configured to: before carrying the access network identity into the query request to send to the HSS, according to a corresponding relation between the access network identity of the user terminal and the number of emergency call requests, search for the number of times for the user terminal sending an emergency call request within a set duration; and
the call judgment module 18 is configured to: judge whether a searched number of emergency call requests is greater than a set threshold value, if yes, reject to respond to the emergency call request of the user terminal; and if not, execute an operation of carrying the access network identity into the query request to send to the HSS.

The comparison module 14 is configured to compare the first authentication data and the second authentication data in the following way: judging whether the received first authentication data and the second authentication data are identical, if the first authentication data and the second authentication data are identical, executing an operation of determining that the authentication is passed and allowing accessing the network; and if the first authentication data and the second authentication data are different, executing an operation of determining that the authentication is not passed and rejecting accessing the network.

### Embodiment 3

As shown in FIG. 4, it is a schematic diagram of a structure of an HSS according to the embodiment 3, the HSS includes: a receiving module 21, a first authentication data calculation module 22 and a sending module 23, wherein:
the receiving module 21 is configured to: receive a query request sent by an MME, wherein, the query request contains an access network identity, and the access network identity sent is carried in an emergency call request message sent by a user terminal to the MME;
the first authentication data calculation module 22 is configured to: according to a locally stored corresponding relation between an access network identity and a device key, determine a device key corresponding to the access network identity contained in the query request, and perform calculation with a security key containing the device key and randomly generated verification information to obtain first authentication data; and
the sending module 23 is configured to: take the randomly generated verification information and the obtained first authentication data as a query result to send to the MME, so that the MME compares the obtained first authentication data and received second authentication data sent by the user terminal, and when a comparison result is that the first authentication data and the second authentication data are identical, determine that an authentication is passed, and allow the user terminal to access a communication network.

Alternatively, the access network identity is an IMEI of the user terminal;
the first authentication data calculation module 22 is further configured to: store a corresponding relation between the IMEI of the user terminal and the device key.

### Embodiment 4

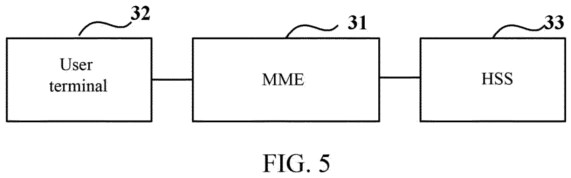

As shown in FIG. 5, it is a structure diagram of a call authentication system according to the embodiment 4, the system includes: an MME 31, a user terminal 32 and an HSS 33, wherein:
the MME 31 is configured to: receive an emergency call request message sent by the user terminal 32, and send a query request containing an access network identity carried in the emergency call request message to the HSS 33; receive a query result carrying verification information and first authentication data returned by the HSS 33, and second authentication data sent by the user terminal 32; compare the first authentication data and the second authentication data, and when a comparison result is that the first authentication data and the second authentication data are identical, determine that an authentication is passed, and allow the user terminal 32 to access a communication network; after allowing the user terminal 32 to access the communication network, receive an emergency call message carrying emergency call contents sent by the user terminal 32, wherein, the emergency call contents are obtained after being encrypted by the user terminal 32 with a security key; and send the received emergency call message to the HSS 33 to be parsed, and return a response message to the user terminal 32 according to a parse result;
the user terminal 32 is configured to: send the emergency call request message carrying the access network identity to the MME 31; send the second authentication data to the MME 31; and after being allowed to access the communication network, send the emergency call message carrying the emergency call contents to the MME 31, wherein, the emergency call contents are obtained after being encrypted with the security key; and
the HSS 33 is configured to: receive the query request carrying the access network identity sent by the MME 31, and according to a locally stored corresponding relation between an access network identity and a device key, determine a device key corresponding to the access network identity contained in the query request, and perform calculation with a security key containing the device key and randomly generated verification information to obtain the first authentication data and send the first authentication data to the MME 31; and after allowing the user terminal 32 to access the communication network, receive and parse the emergency call message carrying the emergency call contents sent by the MME 31.

Alternatively, the user terminal 32 is further configured to: when the user terminal 32 receives the verification information sent by the MME 31, perform calculation on the received verification information with the locally stored security key to obtain the second authentication data.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The embodiments of the present invention are not limited to any combination of hardware and software in a specific form.

Apparently, those skilled in the art can make various modifications and variations for the embodiments of the present invention without departing from the spirit and scope of the present invention. Therefore, if these modifications and variations of the embodiments of the present invention belong to the scope of the claims of the present invention and the equivalent techniques thereof, the present invention also intends to include these modifications and variations.

### Industrial Applicability

In the embodiments of the present invention, the corresponding relation between the IMEI of the user terminal and the device key is locally stored in the user terminal and the HSS respectively, which prevents an illegal user terminal from maliciously using the communication network by means of emergency call, thereby improving the security of the emergency call and guaranteeing the security of application of the communication network.

## Claims

1. A call authentication method, **characterized by** comprising:
a Mobile Management Entity, MME, receiving an emergency call request message carrying an access network identity sent by a user terminal, and carrying the access network identity into a query request to send to a Home Subscriber Server, HSS;
the MME receiving a query result carrying verification information and first authentication data returned by the HSS, wherein, the first authentication data are obtained by the HSS performing calculation with a searched security key and randomly generated verification information; the security key comprises a device key; the device key is determined by the HSS according to a locally stored corresponding relation between the access network identity and the device key;
the MME receiving second authentication data sent by the user terminal, wherein, the second authentication data are obtained by the user terminal performing calculation with a locally stored security key and verification information after receiving the verification information sent by the MME, wherein the locally stored security key comprises the device key, the device key is determined by the user terminal according to a locally stored corresponding relation between the access network identity and the device key; and
the MME comparing the first authentication data and the second authentication data, and when a comparison result is that the first authentication data and the second authentication data are identical, determining that an authentication is passed, and allowing the user terminal to access a communication network;
wherein the access network identity is International Mobile Equipment identity, IMEI, of the user terminal.

2. The method according to claim 1, further comprising: after allowing the user terminal to access the communication network,
the MME receiving an emergency call message carrying emergency call contents sent by the user terminal, wherein, the emergency call contents are obtained after being encrypted by the user terminal with the security key; and
the MME sending the received emergency call message to the HSS to be parsed, and returning a response message to the user terminal according to a parse result.

3. The method according to claim 1, further comprising: after the MME receives the emergency call request message and before the MME sends the query request to the HSS,
according to a corresponding relation between the access network identity of the user terminal and a number of emergency call requests, the MME searching for a number of times for the user terminal sending the emergency call request to the MME within a set duration; and
the MME judging whether a searched number of emergency call requests is greater than a set threshold value, if yes, rejecting to respond to the emergency call request of the user terminal; and if not, executing an operation of sending the query request to the HSS.

4. The method according to any one of claims 1 to 3, wherein, the step of the MME comparing the first authentication data and the second authentication data comprises:
the MME judging whether the received first authentication data and the second authentication data are identical, if the first authentication data and the second authentication data are identical, executing an operation of determining that the authentication is passed and allowing accessing the network; and if the first authentication data and the second authentication data are different, executing an operation of determining that the authentication is not passed and rejecting accessing the network.

5. A call authentication method, **characterized by** comprising:
a Home Subscriber Server, HSS, receiving a query request sent by a Mobile Management Entity, MME, wherein, the query request contains an access network identity, and the access network identity is carried in an emergency call request message sent by a user terminal to the MME;
according to a locally stored corresponding relation between the access network identity and a device key, the HSS determining the device key corresponding to the access network identity contained in the query request, and performing calculation with a security key containing the device key and randomly generated verification information to obtain first authentication data; and
the HSS taking the randomly generated verification information and the obtained first authentication data as a query result to send to the MME, so that the MME compares the obtained first authentication data and received second authentication data sent by the user terminal, and when a comparison result is that the first authentication data and the second authentication data are identical, determining that an authentication is passed, and allowing the user terminal to access a communication network;
wherein the second authentication data are obtained by the user terminal performing calculation with a locally stored security key and verification information after receiving the verification information sent by the MME, wherein the locally stored security key comprises the device key, the device key is determined by the user terminal according to a locally stored corresponding relation between the access network identity and the device key;
wherein the access network identity is International Mobile Equipment identity, IMEI, of the user terminal.

6. A call authentication system, comprising: a Mobile Management Entity, MME, a user terminal and a Home Subscriber Server, HSS; **characterized in that**,
the MME is configured to: receive an emergency call request message sent by the user terminal, and send a query request containing an access network identity carried in the emergency call request message to the HSS; receive a query result carrying verification information and first authentication data returned by the HSS, and second authentication data sent by the user terminal; compare the first authentication data and the second authentication data, and when a comparison result is that the first authentication data and the second authentication data are identical, determine that an authentication is passed, and allow the user terminal to access a communication network; after allowing the user terminal to access the communication network, receive an emergency call message carrying emergency call contents sent by the user terminal, wherein, the emergency call contents are obtained after being encrypted by the user terminal with a security key; and send the received emergency call message to the HSS to be parsed, and return a response message to the user terminal according to a parse result;
the user terminal is configured to: send the emergency call request message carrying the access network identity to the MME; send the second authentication data to the MME; and after being allowed to access the communication network, send the emergency call message carrying the emergency call contents to the MME, wherein, the emergency call contents are obtained after being encrypted with the security key; and
the HSS is configured to: receive the query request carrying the access network identity sent by the MME, and according to a locally stored corresponding relation between the access network identity and a device key, determine the device key corresponding to the access network identity contained in the query request, and perform calculation with the security key containing the device key and randomly generated verification information to obtain the first authentication data and send the first authentication data to the MME; and after allowing the user terminal to access the communication network, receive and parse the emergency call message carrying the emergency call contents sent by the MME;
the user terminal is further configured to: when the user terminal receives the verification information sent by the MME, perform calculation on the received verification information with the locally stored security key to obtain the second authentication data; wherein the locally stored security key comprises the device key, the device key is determined by the user terminal according to a locally stored corresponding relation between the access network identity and the device key;
wherein the access network identity is International Mobile Equipment identity, IMEI, of the user terminal.

## Patentansprüche

1. Rufauthentifizierungsverfahren, **dadurch gekennzeichnet, dass** es Folgendes umfasst:
eine Mobile Management Entity (MME) empfängt eine Notrufanforderungsnachricht, die eine Zugangsnetzidentität transportiert, die durch ein Nutzerendgerät gesendet wurde, und transportiert die Zugangsnetzidentität in eine Anfrageanforderung zum Senden an einen Home Subscriber Server (HSS);
die MME empfängt ein Anfrageergebnis, das Verifizierungsinformationen und erste Authentifizierungsdaten transportiert, die durch den HSS zurückgesendet wurden, wobei die ersten Authentifizierungsdaten erhalten werden, indem der HSS eine Berechnung mit einem gesuchten Sicherheitsschlüssel und nach dem Zufallsprinzip generierten Verifizierungsinformationen ausführt; der Sicherheitsschlüssel einen Geräteschlüssel umfasst; und der Geräteschlüssel durch den HSS gemäß einer lokal gespeicherten entsprechenden Beziehung zwischen der Zugangsnetzidentität und dem Geräteschlüssel bestimmt wird;
die MME zweite Authentifizierungsdaten empfängt, die durch das Nutzerendgerät gesendet wurden, wobei die zweiten Authentifizierungsdaten erhalten werden, indem das Nutzerendgerät eine Berechnung mit einem lokal gespeicherten Sicherheitsschlüssel und Verifizierungsinformationen ausführt, nachdem die durch die MME gesendeten Verifizierungsinformationen empfangen wurden, wobei der lokal gespeicherte Sicherheitsschlüssel den Geräteschlüssel umfasst und der Geräteschlüssel durch das Nutzerendgerät gemäß einer lokal gespeicherten entsprechenden Beziehung zwischen der Zugangsnetzidentität und dem Geräteschlüssel bestimmt wird; und die MME vergleicht die ersten Authentifizierungsdaten und die zweiten Authentifizierungsdaten, und wenn ein Vergleichsergebnis lautet, dass die ersten Authentifizierungsdaten und die zweiten Authentifizierungsdaten identisch sind, so bestimmt sie, dass eine Authentifizierung bestanden wurde, und erlaubt dem Nutzerendgerät den Zugang zu einem Kommunikationsnetz;
wobei die Zugangsnetzidentität eine International Mobile Equipment Identity (IMEI) des Nutzerendgerätes ist.

2. Verfahren nach Anspruch 1, das, nachdem dem Nutzerendgerät der Zugang zu dem Kommunikationsnetz erlaubt wurde, des Weiteren Folgendes umfasst:
die MME empfängt eine Notrufnachricht, die einen Notrufinhalt transportiert, der durch das Nutzerendgerät gesendet wurde, wobei der Notrufinhalt erhalten wird, nachdem er durch das Nutzerendgerät mit dem Sicherheitsschlüssel verschlüsselt wurde; und
die MME sendet die empfangene Notrufnachricht an den HSS, um geparst zu werden, und sendet eine Antwortnachricht gemäß einem Parsing-Ergebnis an das Nutzerendgerät zurück.

3. Verfahren nach Anspruch 1, das, nachdem die MME die Notrufanforderungsnachricht empfangen hat und bevor die MME die Anfrageanforderung an den HSS sendet, des Weiteren Folgendes umfasst:
die MME sucht - gemäß einer entsprechenden Beziehung zwischen der Zugangsnetzidentität des Nutzerendgerätes und einer Anzahl von Notrufanforderungen - eine Anzahl von Malen nach dem Nutzerendgerät, das die Notrufanforderung innerhalb einer eingestellten Dauer an die MME sendet; und
die MME beurteilt, ob eine gesuchte Anzahl von Notrufanforderungen größer ist als ein eingestellter Schwellenwert, und falls ja, so lehnt sie eine Antwort auf die Notrufanforderung des Nutzerendgerätes ab, und falls nicht, so führt sie eine Operation des Sendens der Anfrageanforderung an den HSS aus.

4. Verfahren nach einem der Ansprüche 1 bis 3, wobei der Schritt, in dem die MME die ersten Authentifizierungsdaten und die zweiten Authentifizierungsdaten vergleicht, Folgendes umfasst:
die MME beurteilt, ob die empfangenen ersten Authentifizierungsdaten und die zweiten Authentifizierungsdaten identisch sind, und falls die ersten Authentifizierungsdaten und die zweiten Authentifizierungsdaten identisch sind, so führt sie eine Operation zum Bestimmen aus, dass die Authentifizierung bestanden wurde, und erlaubt den Zugang zum Netz; und falls die ersten Authentifizierungsdaten und die zweiten Authentifizierungsdaten verschieden sind, so führt sie eine Operation zum Bestimmen aus, dass die Authentifizierung nicht bestanden wurde, und verwehrt den Zugang zum Netz.

5. Rufauthentifizierungsverfahren, **dadurch gekennzeichnet, dass** es Folgendes umfasst:
ein Home Subscriber Server (HSS) empfängt eine Anfrageanforderung, die durch eine Mobile Management Entity (MME) gesendet wurde, wobei die Anfrageanforderung eine Zugangsnetzidentität enthält und die Zugangsnetzidentität in einer Notrufanforderungsnachricht transportiert wird, die durch ein Nutzerendgerät an die MME gesendet wird;
die HSS bestimmt - gemäß einer lokal gespeicherten entsprechenden Beziehung zwischen der Zugangsnetzidentität und einem Geräteschlüssel - den Geräteschlüssel, welcher der in der Anfrageanforderung enthaltenen Zugangsnetzidentität entspricht, und führt eine Berechnung mit einem Sicherheitsschlüssel aus, der den Geräteschlüssel und nach dem Zufallsprinzip generierte Verifizierungsinformationen enthält, um erste Authentifizierungsdaten zu erhalten; und
die HSS nimmt die nach dem Zufallsprinzip generierten Verifizierungsinformationen und die erhaltenen ersten Authentifizierungsdaten als ein Anfrageergebnis zum Senden an die MME, so dass die MME die erhaltenen ersten Authentifizierungsdaten und die empfangenen zweiten Authentifizierungsdaten, die durch das Nutzerendgerät gesendet wurden, vergleicht, und wenn ein Vergleichsergebnis lautet, dass die ersten Authentifizierungsdaten und die zweiten Authentifizierungsdaten identisch sind, so bestimmt er, dass eine Authentifizierung bestanden wurde, und erlaubt dem Nutzerendgerät den Zugang zu einem Kommunikationsnetz;
wobei die zweiten Authentifizierungsdaten erhalten werden, indem das Nutzerendgerät eine Berechnung mit einem lokal gespeicherten Sicherheitsschlüssel und Verifizierungsinformationen ausführt, nachdem die durch die MME gesendeten Verifizierungsinformationen empfangen wurden, wobei der lokal gespeicherte Sicherheitsschlüssel den Geräteschlüssel umfasst und der Geräteschlüssel durch das Nutzerendgerät gemäß einer lokal gespeicherten entsprechenden Beziehung zwischen der Zugangsnetzidentität und dem Geräteschlüssel bestimmt wird;
wobei die Zugangsnetzidentität eine International Mobile Equipment Identity (IMEI) des Nutzerendgerätes ist.

6. Rufauthentifizierungssystem, das eine Mobile Management Entity (MME), ein Nutzerendgerät und einen Home Subscriber Server (HSS) umfasst; **dadurch gekennzeichnet, dass**:
die MME für Folgendes konfiguriert ist: Empfangen einer Notrufanforderungsnachricht, die durch das Nutzerendgerät gesendet wurde, und Senden einer Anfrageanforderung, die eine Zugangsnetzidentität enthält, die in der Notrufanforderungsnachricht transportiert wird, an den HSS; Empfangen eines Anfrageergebnisses, das Verifizierungsinformationen und erste Authentifizierungsdaten transportiert, die durch den HSS zurückgesendet wurden, und zweiter Authentifizierungsdaten, die durch das Nutzerendgerät gesendet wurden; Vergleichen der ersten Authentifizierungsdaten und der zweiten Authentifizierungsdaten, und wenn ein Vergleichsergebnis lautet, dass die ersten Authentifizierungsdaten und die zweiten Authentifizierungsdaten identisch sind, Bestimmen, dass ein Authentifizierung bestanden wurde, und dem Nutzerendgerät den Zugang einen Kommunikationsnetz zu erlauben; nachdem dem Nutzerendgerät der Zugang zu dem Kommunikationsnetz erlaubt wurde, Empfangen einer Notrufnachricht, die einen Notrufinhalt transportiert und durch das Nutzerendgerät gesendet wurde, wobei der Notrufinhalt erhalten wird, nachdem er durch das Nutzerendgerät mit einem Sicherheitsschlüssel verschlüsselt wurde; und Senden der empfangenen Notrufnachricht an den HSS, um geparst zu werden, und Zurücksenden einer Antwortnachricht an das Nutzerendgerät gemäß einem Parsing-Ergebnis;
das Nutzerendgerät für Folgendes konfiguriert ist: Senden der Notrufanforderungsnachricht, die die Zugangsnetzidentität transportiert, an die MME; Senden der zweiten Authentifizierungsdaten an die MME; und nachdem ihm der Zugang zu dem Kommunikationsnetz erlaubt wurde, Senden der Notrufnachricht, die den Notrufinhalt transportiert, an die MME, wobei der Notrufinhalt erhalten wird, nachdem er mit dem Sicherheitsschlüssel verschlüsselt wurde; und
die HSS für Folgendes konfiguriert ist: Empfangen der Anfrageanforderung, die die Zugangsnetzidentität transportiert, die durch die MME gesendet wurde, und - gemäß einer lokal gespeicherten entsprechenden Beziehung zwischen der Zugangsnetzidentität und einem Geräteschlüssel - Bestimmen des Geräteschlüssel, welcher der Zugangsnetzidentität entspricht, die in der Anfrageanforderung enthalten ist, und Ausführen einer Berechnung mit dem Sicherheitsschlüssel, der den Geräteschlüssel und nach dem Zufallsprinzip generierte Verifizierungsinformationen enthält, um die ersten Authentifizierungsdaten zu erhalten, und Senden der ersten Authentifizierungsdaten an die MME; und nachdem dem Nutzerendgerät der Zugang zu dem Kommunikationsnetz erlaubt wurde, Empfangen und Parsen der Notrufnachricht, die den Notrufinhalt transportiert, der durch die MME gesendet wurde;
wobei das Nutzerendgerät des Weiteren für Folgendes konfiguriert ist: wenn das Nutzerendgerät die Verifizierungsinformationen empfängt, die durch die MME gesendet wurden, Ausführen einer Berechnung an den empfangenen Verifizierungsinformationen mit dem lokal gespeicherten Sicherheitsschlüssel, um die zweiten Authentifizierungsdaten zu erhalten; wobei der lokal gespeicherte Sicherheitsschlüssel den Geräteschlüssel umfasst und der Geräteschlüssel durch das Nutzerendgerät gemäß einer lokal gespeicherten entsprechenden Beziehung zwischen dem Zugangsnetzidentität und dem Geräteschlüssel bestimmt wird;
wobei die Zugangsnetzidentität eine International Mobile Equipment Identity (IMEI) des Nutzerendgerätes ist.

## Revendications

1. Procédé d'authentification d'appel, **caractérisé en ce qu'**il comprend :
par une entité de gestion mobile, MME, la réception d'un message de demande d'appel d'urgence transportant une identité de réseau d'accès envoyée par un terminal d'utilisateur, et le transport de l'identité de réseau d'accès dans une demande d'interrogation à envoyer à un serveur d'abonné de rattachement, HSS ;
par la MME, la réception d'un résultat d'interrogation transportant des informations de vérification et des premières données d'authentification retournées par le HSS, dans lequel les premières données d'authentification sont obtenues par le HSS effectuant un calcul avec une clé de sécurité recherchée et des informations de vérification générées aléatoirement ; la clé de sécurité comprend une clé de dispositif ; la clé de dispositif est déterminée par le HSS en fonction d'une relation de correspondance mémorisée localement entre l'identité de réseau d'accès et la clé de dispositif ;
par la MME, la réception de deuxièmes données d'authentification envoyées par le terminal d'utilisateur, dans lequel les deuxièmes données d'authentification sont obtenues par le terminal d'utilisateur effectuant un calcul avec une clé de sécurité mémorisée localement et des informations de vérification après la réception des informations de vérification envoyées par la MME, dans lequel la clé de sécurité mémorisée localement comprend la clé de dispositif, la clé de dispositif est déterminée par le terminal d'utilisateur en fonction d'une relation de correspondance mémorisée localement entre l'identité de réseau d'accès et la clé de dispositif ; et
par la MME, la comparaison des premières données d'authentification et des deuxièmes données d'authentification et, lorsqu'un résultat de comparaison est que les premières données d'authentification et les deuxièmes données d'authentification sont identiques, la détermination qu'une authentification est réussie, et l'autorisation au terminal d'utilisateur d'accéder à un réseau de communication ;
dans lequel l'identité de réseau d'accès est une identité d'équipement mobile internationale, IMEI, du terminal d'utilisateur.

2. Procédé selon la revendication 1, comprenant en outre : après l'autorisation au terminal d'utilisateur d'accéder au réseau de communication,
par la MME, la réception d'un message d'appel d'urgence transportant des contenus d'appel d'urgence envoyés par le terminal d'utilisateur, dans lequel les contenus d'appel d'urgence sont obtenus après avoir été cryptés par le terminal d'utilisateur avec la clé de sécurité ; et
par la MME, l'envoi du message d'appel d'urgence reçu au HSS pour qu'il soit analysé syntaxiquement, et le retour d'un message de réponse au terminal d'utilisateur en fonction d'un résultat d'analyse syntaxique.

3. Procédé selon la revendication 1, comprenant en outre : après la réception, par la MME, du message de demande d'appel d'urgence et avant l'envoi, par la MME, de la demande d'interrogation au HSS,
en fonction d'une relation de correspondance entre l'identité de réseau d'accès du terminal d'utilisateur et un nombre de demandes d'appel d'urgence, la recherche, par la MME, d'un nombre de fois que le terminal d'utilisateur envoie la demande d'appel d'urgence à la MME au cours d'une durée réglée ; et
par la MME, le jugement si un nombre recherché de demandes d'appel d'urgence est supérieur à une valeur de seuil réglée ; si tel est le cas, le refus de répondre à la demande d'appel d'urgence du terminal d'utilisateur ; et si tel n'est pas le cas, l'exécution d'une opération d'envoi de la demande d'interrogation au HSS.

4. Procédé selon l'une quelconque des revendications 1 à 3, dans lequel l'étape de la comparaison, par la MME, des premières données d'authentification et des deuxièmes données d'authentification comprend :
par la MME, le jugement si les premières données d'authentification et les deuxièmes données d'authentification sont identiques ; si les premières données d'authentification et les deuxièmes données d'authentification sont identiques, l'exécution d'une opération de détermination que l'authentification est réussie et l'autorisation de l'accès au réseau ; et si les premières données d'authentification et les deuxièmes données d'authentification sont différentes, l'exécution d'une opération de détermination que l'authentification n'est pas réussie et le refus de l'accès au réseau.

5. Procédé d'authentification d'appel, **caractérisé en ce qu'**il comprend :
par un serveur d'abonné de rattachement, HSS, la réception d'une demande d'interrogation envoyée par une entité de gestion mobile, MME, dans lequel la demande d'interrogation contient une identité de réseau d'accès, et l'identité de réseau d'accès est transportée dans un message de demande d'appel d'urgence envoyé par un terminal d'utilisateur à la MME ;
en fonction d'une relation de correspondance mémorisée localement entre l'identité de réseau d'accès et une clé de dispositif, par le HSS, la détermination de la clé de dispositif correspondant à l'identité de réseau d'accès contenue dans la demande d'interrogation et l'exécution d'un calcul avec une clé de sécurité contenant la clé de dispositif et des informations de vérification générées aléatoirement pour obtenir des premières données d'authentification ; et
par le HSS, la prise des informations de vérification générées aléatoirement et des premières données d'authentification obtenues en tant qu'un résultat d'interrogation à envoyer à la MME, de sorte que la MME compare les premières données d'authentification obtenues et les deuxièmes données d'authentification reçues envoyées par le terminal d'utilisateur, et, lorsqu'un résultat de comparaison est que les premières données d'authentification et les deuxièmes données d'authentification sont identiques, la détermination qu'une authentification est réussie, et l'autorisation au terminal d'utilisateur d'accéder à un réseau de communication ;
dans lequel les deuxièmes données d'authentification sont obtenues par l'exécution, par le terminal utilisateur, d'un calcul avec une clé de sécurité mémorisée localement et des informations de vérification après la réception des informations de vérification envoyées par la MME, dans lequel la clé de sécurité mémorisée localement comprend la clé de dispositif, la clé de dispositif est déterminée par le terminal d'utilisateur en fonction d'une relation de correspondance mémorisée localement entre l'identité de réseau d'accès et le dispositif de clé ;
dans lequel l'identité de réseau d'accès est une identité d'équipement mobile internationale, IMEI, du terminal d'utilisateur.

6. Système d'authentification d'appel, comprenant : une entité de gestion mobile, MME, un terminal d'utilisateur et un serveur d'abonné de rattachement, HSS ; **caractérisé en ce que** :
la MME est configurée pour effectuer : la réception d'un message de demande d'appel d'urgence envoyé par le terminal d'utilisateur et l'envoi d'une demande d'interrogation contenant une identité de réseau d'accès transportée dans le message de demande d'appel d'urgence au HSS ; la réception d'un résultat d'interrogation transportant des informations de vérification et des premières données d'authentification retournées par le HSS, et des deuxièmes données d'authentification envoyées par le terminal d'utilisateur ; la comparaison des premières données d'authentification et des deuxièmes données d'authentification et, lorsqu'un résultat de comparaison est que les premières données d'authentification et les deuxièmes données d'authentification sont identiques, la détermination qu'une authentification est réussie, et l'autorisation au terminal d'utilisateur d'accéder à un réseau de communication ; après l'autorisation au terminal d'utilisateur d'accéder au réseau de communication, la réception d'un message d'appel d'urgence transportant des contenus d'appel d'urgence envoyés par le terminal d'utilisateur, dans lequel les contenus d'appel d'urgence sont obtenus après avoir été cryptés par le terminal d'utilisateur avec une clé de sécurité ; et l'envoi du message d'appel d'urgence reçu au HSS pour qu'il soit analysé syntaxiquement, et le retour d'un message de réponse au terminal d'utilisateur en fonction d'un résultat d'analyse syntaxique ;
le terminal d'utilisateur est configuré pour effectuer : l'envoi du message de demande d'appel d'urgence transportant l'identité de réseau d'accès à la MME ; l'envoi des deuxièmes données d'authentification à la MME ; et après avoir été autorisé à accéder au réseau de communication, l'envoi du message d'appel d'urgence transportant les contenus d'appel d'urgence à la MME, dans lequel les contenus d'appel d'urgence sont obtenus après avoir été cryptés avec la clé de sécurité ; et
le HSS est configuré pour effectuer : la réception de la demande d'interrogation transportant l'identité de réseau d'accès envoyée par la MME, et, en fonction d'une relation de correspondance mémorisée localement entre l'identité de réseau d'accès et une clé de dispositif, la détermination de la clé de dispositif correspondant à l'identité de réseau d'accès contenue dans la demande d'interrogation, et l'exécution d'un calcul avec la clé de sécurité contenant la clé de dispositif et des informations de vérification générées aléatoirement pour obtenir les premières données d'authentification et l'envoi des premières données d'authentification à la MME ; et après l'autorisation au terminal d'utilisateur d'accéder au réseau de communication, la réception et l'analyse syntaxique du message d'appel d'urgence transportant les contenus d'appel d'urgence envoyés par la MME ;
le terminal d'utilisateur est en outre configuré pour effectuer : lorsque le terminal d'utilisateur reçoit les informations de vérification envoyées par la MME, l'exécution d'un calcul sur les informations de vérification reçues avec la clé de sécurité mémorisée localement pour obtenir les deuxièmes données d'authentification ; dans lequel la clé de sécurité mémorisée localement comprend la clé de dispositif, la clé de dispositif est déterminée par le terminal d'utilisateur en fonction d'une relation de correspondance mémorisée localement entre l'identité de réseau d'accès et la clé de dispositif ;
dans lequel l'identité de réseau d'accès est une identité d'équipement mobile internationale, IMEI, du terminal d'utilisateur.
